# EUROPÄISCHE PATENTSCHRIFT

(11) **EP 4 298 358 B1**
(45) Veröffentlichungstag und Bekanntmachung des Hinweises auf die Patenterteilung: **03.12.2025**
(21) Anmeldenummer: 22705013.5
(22) Anmeldetag: 14.01.2022
(51) Int. Cl.: F16G 5/08, F16G 5/20

(54) **KEILRIPPENRIEMEN**
V-RIBBED BELT
COURROIE TRAPÉZOÏDALE À NERVURES

(30) Priorität: 23.02.2021 DE 102021201705
(43) Veröffentlichungstag der Anmeldung: 03.01.2024
(73) Patentinhaber: ContiTech Deutschland GmbH, 30175 Hannover (DE)
(72) Erfinder: KANZOW, Henning, 30165 Hannover (DE); KAUTZ, Stephanie, 30165 Hannover (DE); GASKA, Roman, 30165 Hannover (DE)
(74) Vertreter: Preusser, Andrea
(86) Internationale Anmeldenummer: PCT/DE2022/200000
(87) Internationale Veröffentlichungsnummer: WO 2022/179667

(56) Entgegenhaltungen:
- EP-A1- 3 015 738
- EP-B1- 2 981 735
- DE-A1- 102017 219 339
- DE-A1- 102017 223 383

## Beschreibung

Die Erfindung betrifft einen Keilrippenriemen mit einem elastischen Grundkörper aufgebaut aus wenigstens einer Kautschukmischung, umfassend eine Decklage als Riemenrücken und einen gerippten Unterbau mit einer Kraftübertragungsseite.

Keilrippenriemen sind im Funktionszustand zumeist endlos geschlossen und werden bei Kraftfahrzeugen mit Verbrennungsmotoren im Nebenaggregat verwendet, um z.B. den Generator, auch Lichtmaschine genannt, anzutreiben. Dabei sind übermäßige Geräuschentwicklung im Betrieb zu vermeiden. Ein besonders unangenehmes Geräusch ist das Zwitschergeräusch, das sich einstellt, wenn die Scheiben im Keilrippenriementrieb nicht in einer Ebene liegen, also einen Versatz haben, oder z.B. durch Lagerverschleiß schief stehen.

Da diese Schiefstellungen in vielen Keilrippenriementrieben nicht vermieden werden können, werden die meisten Keilrippenriemen mit einer besonderen Oberfläche auf der gerippten Funktionsseite versehen. Insbesondere haben sich Textilbeschichtungen bzw. Textilauflagen auf der Funktionsseite zur Unterdrückung von Zwitschergeräuschen (engl. chirp noise") bewährt. Nachteilig an den Textilbeschichtungen bzw. Textilauflagen ist allerdings, dass sie die Reibung herabsetzen. Eine zu geringe Reibung führt zu viel Schlupf und damit zu Energieübertragungsverlusten, die den Riemen aufheizen und die Lebensdauer des Riemens stark herabsetzen können.

Textilauflagen bzw. Textilbeschichtungen, insbesondere für Keilrippenriemen, sind vielfach bekannt.

So offenbart zum Beispiel US3839116 A ein Verfahren zur Herstellung von Form-Keilrippenriemen (KRR) bei der ein elastisches Gewebe auf die gerippte Funktionsseite aufgebracht wird.

US 3981206 A beschreibt einen Keilrippenriemen, bei dem im Formverfahren in die Oberfläche ein zweiseitig dehnbares Textil aus gestrickten Fäden einvulkanisiert wird, wobei das verwendete Textil ein Kombinationsgarn aus umeinander gewundenen Filamenten von elastischem Polyurethan und Polyamid besteht. In US 4027545 A ist die Anwendung derartiger Keilrippenriemen konkretisiert und sind spezielle Einstellung dieser Riemen beschrieben. DE102006007509 A1 offenbart Keilrippenriemen mit Kettwirkware als Rippenbeschichtung, die aus Polyamidgarn und Polyurethan besteht, die so verwirkt sind (Wirkmuster Chameuse), dass sie unabhängige Netzwerke bilden. DE102007042917 A1 beschreibt Keilrippenriemen mit einer Textilauflage aus Stapelfasern, insbesondere aus Baumwolle. Baumwollbeschichtungen sind zwar hinsichtlich ihres Geräuschverhaltens gut, zeigen aber für anspruchsvolle Anwendungen eine schlechte Abriebbeständigkeit.

DE112014001531 T5 offenbart Keilrippenriemen mit einem Jersey-Gestrick als Textilauflage, bei dem die rechte Seite des Gestricks ("Vorderseite") bevorzugt außen auf den Rippen liegt, und die Maschenlängsrichtung bevorzugt in Riemenumfangsrichtung liegt. Das Gestrick besteht aus mit Wolle veredelten Garne aus Polyamid-, Polyester-, Baumwoll- und Nylonfasern, oder umsponnene Garne mit elastischem Polyurethan als Kerngarn. Diese umsponnenen Garne müssen aufwendig hergestellt werden, was die Gesamtkosten des Riemens deutlich erhöht. EP2 981 735 B1 zeigt einen gattungsgemäßen Keilrippenriemen.

In den genannten Beispielen besteht allerdings das Problem, dass die beschriebenen Textilbeschichtungen für den Einsatz im Kraftfahrzeug meist eine zu niedrige Reibung, also einen zu geringen Reibbeiwert (CoF), besitzen.

Es ist daher die Aufgabe der vorliegenden Erfindung, einen Keilrippenriemen bereitzustellen, der eine Textilauflage bzw. eine Textilbeschichtung besitzt, die eine ausreichende Reibung besitzt und so eine möglichst lange Lebensdauer, insbesondere in Form einer guten Biegewechselbeständigkeit, des Riemens gewährleisten kann. Zusätzlich muss die Textilbeschichtung bzw. die Textilauflage für den Einsatz im Kraftfahrzeug ausreichend abriebbeständig sein und einen guten Schutz gegen Zwitschergeräusche bieten. Des Weiteren soll der Riemen kostengünstig herstellbar sein.

Gelöst wird diese Aufgabe dadurch, dass der Keilrippenriemen auf seiner Kraftübertragungsseite eine Beschichtung aus einem Textil besitzt, wobei das Gestrick aus einer Kombination aus einem Multifilamentgarn aus Polyamid und einem elastischen Faden besteht, ein Single Jersey ist und das mittlere Flächengewicht des Textils vor der Vulkanisation zwischen 145 und 170 g/m² beträgt.

Die Ermittlung des Flächengewichts des Textils erfolgt nach DIN EN 12127, Ausgabe 1997-12.

Überraschenderweise hat sich gezeigt, dass sich die Reibung, das Geräuschverhalten und die Lebensdauer des Riemens, insbesondere die Biegewechselbeständigkeit, verbessern lassen, wenn er mit einer Textilauflage versehen ist, deren mittleres Flächengewicht vor der Vulkanisation zwischen 140 und 190 g/m² liegt.

Zur Vereinfachung werden die Begriffe Textilauflage und Textilbeschichtungen im Folgenden synonym verwendet.

Erfindungsgemäß ist die Textilauflage ein Gestrick mit einem mittleren

Flächengewicht vor der Vulkanisation zwischen 145 bis 170 g/m².

Als Gestrick wird ein Flächengebilde bezeichnet, das aus einem oder mehreren Fäden oder aus einem oder mehreren Fadensystemen durch Maschenbildung hergestellt ist.

Hierdurch wird überraschend ein guter Kompromiss zwischen geringen Materialeinsatz, somit geringeren Herstellkosten und gutem Geräuschverhalten erzielt.

Mit den erfindungsgemäßen mittleren Flächengewichten lässt sich somit ein offenporiges Gestrick als Textilauflage einsetzen, welches Reibung und Lebensdauer gleichzeitig positiv beeinflussen kann.

Erfindungsgemäß ist das Gestrick ein Single Jersey. Bevorzugt ist, dass die

linke Warenseite des Textils nach außen zeigt. So ergibt sich eine gleichmäßigere Oberfläche und bessere Dauerhaltbarkeit. Die Maschenbilder "rechte Warenseite" und "linke Warenseite" werden z.B. in dem Textiltechnikbuch "Wirkerei und Strickerei" von Klaus Peter Weber und Marcus Weber, Melliand, 4. Auflage, 2004, Seiten 14, 15 dargestellt.

Zur besseren Herstellbarkeit kann die Maschenlängsrichtung des Textils weitgehend parallel zur Umfangsrichtung des Riemens liegen.

Bevorzugt ist es, dass, bedingt durch die Offenporigkeit der Textilauflage, die Oberfläche der Kraftübertragungszone zu weniger als 40% bezogen auf die Gesamtoberfläche der Kraftübertragungszone durch die Fäden oder die Fadensysteme der Textilauflage abgedeckt wird.

Mehr als 60% der Oberfläche der Kraftübertragungszone bezogen auf die Gesamtoberfläche derselben besteht somit aus dem Material des Unterbaus.

Grundsätzlich kann für die Textilauflage jedes natürliche oder synthetische Material allein oder in Kombination verwendet werden. Erfindungsgemäß wird das Textil aus einer Kombination aus einem Multifilamentgarn aus Polyamid, bevorzugt PA6 oder PA6.6, besonders bevorzugt PA6, und einem elastischen Faden gebildet.

Der elastische Faden ist dadurch gekennzeichnet, dass er eine Reißdehnung gemäß DIN EN ISO 2062:1995 von mehr als 100% hat. Ein typisches Beispiel für solche elastischen Fäden sind Fäden, die zu mindestens 85 Gew. -% aus Polyurethan bestehen, und unter dem Begriff "Elastan" oder im englischsprachigen Raum als "spandex" bekannt sind.

Die Textilauflage wird bevorzugt plattiert gestrickt, welches eine besonders effiziente und kostengünstige Strickweise darstellt. Dabei ist es bevorzugt, dass sich der elastische Faden auf der linken Warenseite befindet, da so eine größere Haftung zwischen Textil und dem elastomeren Grundkörper erreicht wird.

Zur Optimierung der Dehnbarkeit kann das Multifilamentgarn texturiert sein.

Der Gewichtsanteil des elastischen Fadens an der Textilauflage beträgt vorteilhafterweise zwischen 8 und 16 Gew.-%. Hierdurch werden eine ausreichende Dehnbarkeit und eine gute Verarbeitbarkeit gewährleistet.

Zusätzlich kann der Keilrippenriemen für eine gute Dauerhaltbarkeit und eine einfache Herstellung einen offenen Textilstoß haben, der quer zur Riemenumfangrichtung ist und nur aus dem elastomeren Material des Unterbaus besteht und bevorzugt eine Breite von 0,5 bis 6 mm hat.

Bevorzugt hat der Riemen ein PK-Profil gemäß ISO 9981 mit einer Profiltiefe von 2,2 bis 2,6 mm. Riemen mit einer niedrigeren Profiltiefe neigen dazu, zu viel Schlupf zu zeigen und eine schlechtere Verschleißbeständigkeit zu haben. Eine zu große Profiltiefe führt dazu, dass der Riemen insgesamt zu dick wird, was seine Biegewechselbeständigkeit herabsetzt.

Der elastische Grundkörper ist bevorzugt auf der Basis wenigstens einer Kautschukmischung. Die Kautschukmischung des Grundkörpers enthält hierbei wenigstens eine Kautschukkomponente.

Als Kautschukkomponente wird insbesondere Ethylen-Propylen-Kautschuk (EPM), Ethylen-Propylen-Dien-Kautschuk (EPDM), (teil)hydrierter Nitrilkautschuk (HNBR), Fluor-Kautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Gemäß der vorliegenden Erfindung findet insbesondere für den Unterbau mit der Kraftübertragungsseite EPM oder EPDM oder ein EPM/EPDM-Verschnitt Verwendung. In einer bevorzugten Ausführungsform wird das EPM, EPDM oder der Verschnitt aus EPM und EPDM peroxidisch vernetzt.

Die Kautschukmischung des Grundkörpers enthält weiterhin wenigstens einen Füllstoff. Hierbei handelt es sich vorteilhafterweise um wenigstens einen Ruß oder um wenigstens eine Kieselsäure. Als besonders geeignet hat sich die Kombination von Ruß und Kieselsäure gezeigt. Es können hierbei alle in der Kautschukindustrie bekannten Kieselsäuren, vorzugsweise Fällungskieselsäuren, verwendet werden. Ebenso können alle bekannten Rußtypen, insbesondere Furnace- und Thermalruße, wie SAF, SCF, HAF, FF, FEF, XCF, HMF, GPF, SRF, MPF, FT oder MT verwendet werden, wobei FEF-Ruße besonders bevorzugt sind.

Die Mischungsingredienzien der Kautschukmischung umfassen zusätzlich wenigstens einen Vernetzer oder ein Vernetzersystem (Vernetzungsmittel und Beschleuniger). Weitere Mischungsingredienzien sind zumeist noch Verarbeitungshilfsmittel und/oder Weichmacher und/oder Alterungsschutzmittel sowie gegebenenfalls weitere Zusatzstoffe, beispielweise Fasern zwecks Verstärkung, und Farbpigmente. Bevorzugt ist allerdings eine faserfreie Mischung. Diesbezüglich wird auf den allgemeinen Stand der Kautschukmischungstechnologie verwiesen.

Um eine gute Balance zwischen der Biegewechselbeständigkeit des Riemens und der Abriebbeständigkeit zu erzielen, besitzt die Kautschukmischung des Grundkörpers in einer vorteilhaften Ausgestaltung nach der Vulkanisation eine Shore-A-Härte gemäß DIN ISO 7619-1 (Februar 2012) zwischen 70 und 90, bevorzugt zwischen 75 und 87.

Die Erfindung soll nun anhand von Vergleichs- und Ausführungsbeispielen, die in der Tabelle 1 zusammengefasst sind, näher erläutert werden.

Für alle Beispiele wurde jeweils ein Keilrippenriemen mit einem Grundkörper auf der Basis von einer peroxidisch vernetzten, faserfreien Kautschukmischung mit 100 phr EPDM, sowohl für die Decklage als auch für den Unterbau, hergestellt. Die ShoreA-Härte der vulkanisierten Mischung gemäß DIN ISO 7619-1 (Februar 2012) betrug 79.

Die untersuchten Keilrippenriemen sind 6PK-Riemen mit einer Länge von 1330 mm und haben ein PK-Profil mit einer Profiltiefe von 2,3 mm.

Ermittelt wurden der Reibungswert (CoF, Coefficient of Friction gemäß SAE_J_2432).

Als gut ist ein CoF-Wert zwischen 1,45 und 1,85 zu werten. Riemen mit niedrigeren Werten können für viele Anwendungen meist nicht genug Leistung übertragen. CoF-Werte größer als 1,85 neigen zu Geräuschen, insbesondere beim Startvorgang des Motors.

Zusätzlich wurde eine Hitzebiegewechselprüfung (HBW) durchgeführt. Bei der HBW-Prüfung werden die Keilrippenriemen auf Dauerhaltbarkeit (Biegewechsel) und Wärmealterung getestet, wobei eine tägliche visuelle Kontrolle des Riemens erfolgte.

Gewöhnlich zeigen Keilrippenriemen im Rahmen der HBW-Prüfung nach einer gewissen Laufzeit erst Anbrüche und dann Ausbrüche. Als Soll-Vorgabe wird ein Wert von mehr als 250 h vorgegeben. Die Prüfung wurde jeweils abgebrochen, wenn bei der täglich durchzuführenden Kontrolle drei oder mehr Anbrüche oder ein oder mehr Ausbrüche am Unterbau beobachtet wurden. Bei der Prüfung handelte es sich um eine 5-Scheibenprüfung (Durchmesser Antriebsscheibe = 60 mm, weitere Scheiben = 50 mm), die an den VDA-Hitzebiegewechseltest (Stand 27.09.2005) angelehnt ist, der wiederum 9 Scheiben verwendet. Die Prüfung wurde konstant bei 130°C Umgebungstemperatur durchgeführt.

Zusätzlich wurde eine Geräuschprüfung durchgeführt, bei der das Geräuschverhalten bei Scheibenversatz untersucht wurde. Der Geräuschprüfstand hat eine gerippte Antriebsscheibe mit einem Durchmesser von 130 mm. Im Lasttrum folgt eine unprofilierte Umlenkrolle mit einem Durchmesser von 65 mm und eine Rippenrolle mit 60 mm Durchmesser und eine Abtriebsrolle mit 50 mm Durchmesser. Die Riemen wurden mit einer Trumkraft von 330N vorgespannt und von der Antriebsrolle mit 1000 Umdrehungen pro Minute angetrieben. Die Antriebsrolle selbst wird von einem Elektromotor über ein Kardangelenk angetrieben, das für eine ungleichförmige Bewegung der Antriebsrolle sorgt. Bei der Durchführung des Geräuschtests wird die Rippenrolle aus der Nulllage nach vorne senkrecht zum Keilrippenriementrieb ausgelenkt, so dass sich ein Versatz zwischen den profilierten Scheiben im Keilrippenriementrieb ergibt. Dadurch wird der Trum des Riemens zwischen der Umlenkrolle und der profilierten Rolle um einen Winkel α aus der von dem Riemen umschlossenen Ebene ausgelenkt, wodurch manche Riemen Zwitschergeräusche erzeugen. Riemen, die auch bei Schiefstellungen bis 2° keine Geräusche aufwiesen, wurden als gut "+" bewertet. Riemen, die bis 1.5° keine Geräusche aber bei 2° Geräusche aufwiesen, wurden als befriedigend "o" bewertet. Riemen, die auch Geräusche bei unter 1.5° Schiefstellung entwickeln, wurden als geräuschlich schlecht "-" bewertet.

Anhand der Tabelle 1 ist zu erkennen, dass die besten Ergebnisse mit dem Gestrick 4, also mit einem aus PA6 und PU (Elastan) plattiert gestrickten Jerseygestrick (mit der linken Warenseite außen und dem PU auf der linken Warenseite) mit einem Flächengewicht von 156 g/m² erzielt werden. Überraschend sind vor allen Dingen die Unterschiede in den HBW-Laufzeiten, bei denen sich der Vorteil von PA6 im Vergleich zu einem Gestrick aus Baumwolle und Elastan zeigt.

**Tabelle 1**

| | **Textilstruktur** | **Material** | **Gew.-% Filamentgarn zu Elastan** | **Längengewicht Hauptgarn** | **Flächengewicht [g/m²]** | **CoF** | **HBW-Laufzeit** | **Geräuschverhalten** |
|---|---|---|---|---|---|---|---|---|
| 1 | Charmeuse-Kettwirkware | PA6/PU | 80:20 | 44 dtex | 155 | 1,73 | 240 h | **+** |
| 2 | Jersey-Gestrick | PA6/PU | 87:13 | 110 dtex | 128 | 2,02 | 312 h | - |
| 3 | Jersey-Gestrick | PA6/PU | 87:13 | 110 dtex | 142 | 1,88 | 288 h | **o** |
| 4 | Jersey-Gestrick | PA6/PU | 87:13 | 110 dtex | 156 | 1,70 | 344 h | + |
| 5 | Jersey-Gestrick | BW/PU | 91:9 | 147 dtex | 196 | 1,52 | 186 h | **+** |
| 6 | Jersey-Gestrick | BW/PU | 91:9 | 147 dtex | 103 | 1,65 | 206 h | **+** |
| 7 | Jersey-Gestrick | BW/PU | 91:9 | 147 dtex | 133 | 1,81 | 160 h | **+** |
| 8 | Jersey-Gestrick | BW/PU | 91:9 | 147 dtex | 195 | 1,75 | 179 h | **+** |

## Patentansprüche

1. Keilrippenriemen mit einem elastischen Grundkörper aufgebaut aus wenigstens einer Kautschukmischung, umfassend eine Decklage als Riemenrücken und einen Unterbau mit einer gerippten Kraftübertragungsseite, wobei die gerippte Kraftübertragungsseite eine Beschichtung aus einem Gestrick besitzt, wobei das Gestrick aus einer Kombination aus einem Multifilamentgarn aus Polyamid und einem elastischen Faden besteht, **dadurch gekennzeichnet, dass** das Gestrick ein Single Jersey ist und das mittlere Flächengewicht des Textils vor der Vulkanisation 145 g/m² bis 170 g/m², beträgt, wobei das Flächengewicht des Textils gemäß DIN EN 12127, Ausgabe 1997-12 ermittelt wurde.

2. Keilrippenriemen nach Anspruch 1, wobei das Polyamid PA 6 oder PA 6.6 ist.

3. Keilrippenriemen nach Anspruch 1 oder 2, wobei der elastische Faden aus Polyurethan besteht.

4. Keilrippenriemen nach einem der Ansprüche 1 bis 3, wobei als Kautschuk für die Kautschukmischung des Unterbaus Ethylen-Propylen-Kautschuk (EPM) oder Ethylen-Propylen-Dien-Kautschuk (EPDM) oder eine Kombination aus EPM und EPDM eingesetzt wird.

5. Keilrippenriemen nach einem der Ansprüche 1-4, wobei die Rippentiefe zwischen 2,2 und 2,6 mm beträgt.

## Claims

1. V-ribbed belts with an elastic base body consisting of at least one rubber compound, comprising a top layer as the back of the belt and a substructure with a ribbed power transmission side, the ribbed power transmission side having a coating of a knitted fabric, the knitted fabric consisting of a combination of a polyamide multifilament yarn and an elastic thread, **characterised in that** the knitted fabric is a single jersey and the average basis weight of the textile before vulcanisation is 145 g/m² to 170 g/m², whereby the basis weight of the textile was determined in accordance with DIN EN 12127, edition 1997-12.

2. V-ribbed belts according to claim 1, wherein the polyamide is PA 6 or PA 6.6.

3. V-ribbed belt according to claim 1 or 2, wherein the elastic thread is made of polyurethane.

4. A V-ribbed belt according to any one of claims 1 to 3, wherein ethylene-propylene rubber (EPM) or ethylene-propylene-diene rubber (EPDM) or a combination of EPM and EPDM is used as rubber for the rubber compound of the substructure.

5. V-ribbed belt according to any one of claims 1-4, wherein the rib depth is between 2.2 and 2.6 mm.

## Revendications

1. Ceintures à nervures en V à corps de base élastique constitué d'au moins un composé de caoutchouc, comprenant une couche supérieure à l'arrière de la ceinture et une sous-structure à côté de transmission de puissance nervuré, le côté de transmission de puissance nervuré ayant un revêtement d'un tissu tricoté, le tissu tricoté constitué d'une combinaison d'un fil multifilament de polyamide et d'un fil élastique, **caractérisés en ce que** le tissu tricoté est un jersey simple et le poids de base moyen du textile avant la vulcanisation est de 145 g/m² à 170 g/m², le poids de base du textile ayant été déterminé conformément à la norme DIN EN 12127, édition 1997-12.

2. Courroies trapézoïdales selon la revendication 1, dans lesquelles le polyamide est PA 6 ou PA 6.6.

3. Courroie trapézoïdale selon la revendication 1 ou 2, dans laquelle le fil élastique est en polyuréthane.

4. Courroie trapézoïdale selon l'une quelconque des revendications 1 à 3, dans laquelle du caoutchouc éthylène-propylène (EPM) ou du caoutchouc éthylène-propylène-diène (EPDM) ou une combinaison d'EPM et d'EPDM est utilisé comme caoutchouc pour le composé de caoutchouc de la sous-structure.

5. Ceinture trapézoïdale selon l'une quelconque des revendications 1 à 4, dans laquelle la profondeur des nervures est comprise entre 2,2 et 2,6 mm.
